# NEUE EUROPÄISCHE PATENTSCHRIFT

(11) **EP 3 240 259 B2**
(45) Veröffentlichungstag und Bekanntmachung des Hinweises auf die Entscheidung über den Einspruch: **27.12.2023**
(45) Hinweis auf die Patenterteilung: 24.03.2021
(21) Anmeldenummer: 17000655.5
(22) Anmeldetag: 19.04.2017
(51) Int. Cl.: H04L 29/08, H04L 29/06

(54) **KOMMUNIKATIONSEINRICHTUNG EINER KREISELPUMPE**
COMMUNICATION DEVICE, IN PARTICULAR FOR A CENTRIFUGAL PUMP
DISPOSITIF DE COMMUNICATION, EN PARTICULIER POUR UNE POMPE CENTRIFUGE

(30) Priorität: 27.04.2016 DE 102016005102
(43) Veröffentlichungstag der Anmeldung: 01.11.2017
(73) Patentinhaber: WILO SE, 44263 Dortmund (DE)
(72) Erfinder: Knapp, Thomas, 33803 Steinhagen (DE)
(74) Vertreter: Cohausz Hannig Borkowski Wißgott

(56) Entgegenhaltungen:
- EP-A1- 2 573 403
- EP-A2- 1 146 231
- EP-A2- 2 555 582
- EP-A2- 2 555 582
- EP-B1- 1 850 014
- WO-A1-2011/160152
- WO-A1-2013/149281
- WO-A1-2016/030517
- CN-A- 104 294 909
- DE-A1- 10 056 469
- DE-A1-102014 113 884
- US-A1- 2004 218 591
- US-A1- 2009 204 234
- US-A1- 2010 312 401
- US-A1- 2012 084 400
- US-A1- 2012 093 141
- US-A1- 2012 221 713
- Anonymous: "User Guide NTC-6000 Series ? 3G M2M Router", NetConnWireless, , pages 1-117, XP055907306,
- "ZIG BEE Specification", ZIG BEE SPECIFICATION, 17 January 2008 (2008-01-17), Retrieved from the Internet: URL:https://people.ece.cornell.edu/land/co urses/ece4760/FinalProjects/s2011/kjb79_aj m232/pmeter/ZigBee%20Specification.pdf
- ZIGBEE CLUSTER LIBRARY SPECIFICATION, 29 May 2008 (2008-05-29), pages 1-604, Retrieved from the Internet: URL:https://people.ece.cornell.edu/land/co urses/ece4760/FinalProjects/s2011/kjb79_aj m232/pmeter/ZigBee%20Specification.pdf [retrieved on 2008-01-17]
- ?Datenbuskommunikation zwischen Gebaudeautomation und Grundfospumpen?, Januar 2008
- Communication interfaces - Complete Control for pumps and pump systems?, Januar 2011
- ''Communication interface for BACnet MS/TP - for building automation? (letzte Seite: 97626099)
- ''Communication interface for Modbus RTU - for automation", Mai 2014(letzte Seite: 97501369/0514/10869-D&I)
- ''Grundfos Magna3 MORE THAN A PUMP?, November 2012 (letzte Seite:item No. 98366695/Version No.1112)
- Auszug aus ?MAGNA3?- databook, Seiten 129-131
- 3 kombinierte Grundfos-Broschueren aus dem Jahre 2013

## Beschreibung

Die Erfindung betrifft eine Kreiselpumpe der technischen Gebäudeausrüstung umfassend eine Kommunikationseinrichtung, mit einer ersten Kommunikationsschnittstelle zur Verbindung der Kreiselpumpe mit einem lokalen Kommunikationsendgerät, und mit einer zweiten Kommunikationsschnittstelle zum Anschließen der Kreiselpumpe an ein lokales oder globales Netzwerk zur Kommunikation mit einem entfernten Kommunikationsendgerät einer Servicestelle. Ferner betrifft die Erfindung ein Verfahren zur Kommunikation zwischen dem lokalen Kommunikationsendgerät und dem entfernten Kommunikationsendgerät der Servicestelle.

Komponenten und Systeme der technischen Gebäudeausrüstung werden häufig in Räumen installiert, die keine eigene Kommunikationsmöglichkeit bereitstellen. Unter den hier angesprochenen Komponenten sind beispielsweise Ventile, Stellmotoren, Regler, Wasseruhren, Gaszähler, Stromzähler, Heizungspumpen, Kühlmittelpumpen, Solarpumpen, Wärmepumpen, Durchlauferhitzer, etc. zu verstehen. Unter einem System wird im Sinne der vorliegenden Erfindung eine bauliche oder funktionale Vereinigung verschiedener Komponenten, beispielsweise eine zentrale Heizungsanlage, insbesondere eine Heiz- oder Gastherme zur Beheizung von Räumlichkeiten und/ oder Warmwasserbereitung, ein zentrales Kühlsystem oder eine Klimaanlage, eine Druckerhöhungsanlage für die Trinkwasserversorgung, eine Hebeanlage oder sonstige Abwasserpumpstationen für die Abwasserentsorgung verstanden.

Die genannten Räume sind in der Regel spezielle Technikräume, Heizungskeller oder Lüftungszentralen in Gebäuden. Diese Räume befinden meist im Erd- oder einem Untergeschoss eines Gebäudes, um den wertvollen Nutz- und Wohnraum der höheren Etagen nicht zu vermindern, insbesondere auch im Hinblick auf eine mögliche Geräusch- oder Geruchsbelästigung.

Bei der Installation, Wartung oder Reparatur kommt es nicht selten vor, dass der Installateur oder Techniker vor Ort Probleme mit der Komponente oder dem System hat, die er nicht ohne Hilfe des Services des Herstellers lösen kann. In der Praxis wird dann der Service über eine entsprechende Hotline telefonisch kontaktiert, so dass er entsprechende Maßnahmen zur Problembehebung mitteilen kann. Die telefonische Kontaktaufnahme erfolgt mangels eigens vorhandener Kommunikationseinrichtungen in dem Technikraum zumeist über ein Mobiltelefon, das der Installateur oder Techniker mit sich trägt. Aufgrund der Anordnung der Technikräume im Erd- oder Untergeschoss eines Gebäudes ist jedoch der Mobilfunkempfang vor Ort entweder sehr schlecht oder gar nicht vorhanden. Dies führt dazu, dass der Installateur oder Servicetechniker den Raum verlassen muss, um in einer höher gelegenen Etage oder gar vor dem Gebäude einen besseren Mobilfunkempfang zu erhalten.

Benötigt der Service jedoch zur Problemlösung bestimmte Informationen, beispielsweise eine Artikel- oder Seriennummer, bestimmte Betriebsdaten, einen Fehlercode und/oder Angaben über bestimmte Betriebseinstellungen der Komponente oder des Systems, die der Installateur oder Techniker gerade nicht zur Hand hat bzw. erst am Gerät ermitteln muss, muss er erneut in den Technikraum gehen um die Informationen zu beschaffen. Dies führt zu weiteren Unannehmlichkeiten. Dabei bricht ferner die Mobilverbindung ab, so dass der Service erneut kontaktiert werden muss. Nicht selten ist es dann bei Herstellern so, dass bei einer zweiten Kontaktierung ein anderer Mitarbeiter den Serviceanruf entgegen nimmt, dem das zuvor bereits geschilderte Problem erneut erklärt werden muss.

Selbst wenn der Service eine Maßnahme zur Problembehebung vorschlägt, die letztendlich aber das Problem nicht löst, muss sich der Installateur oder Techniker nach dem Ausprobieren der Maßnahme erneut außerhalb des Raumes begeben, um Kontakt mit dem Service aufzunehmen.

Es versteht sich von selbst, dass diese Prozedur besonders aufwendig, unpraktisch und lästig, vor allem auch ärgerlich ist, weil der Installateur oder Techniker dadurch wertvolle Zeit verliert.

Abgesehen von dieser Problematik ist es bekannt, Komponenten und Systeme der technischen Gebäudeausrüstung mit Kommunikationsschnittstellen auszurüsten, um sie einerseits zur Fernsteuerung und Fernabfrage durch ein externes Kommunikationsendgerät einzurichten und andererseits um eine bequeme Vor-Ort Abfrage oder Steuerung vornehmen zu können, die dem Installateur oder Techniker die Bedienung erleichtert. Für den erstgenannten Fall besitzen die Komponenten oder Systeme meist Bus-Schnittstellen, um sie an ein Netzwerk, beispielsweise eine Gebäudeleittechnik anzuschließen. Hierüber können dann Betriebseinstellungen, Betriebsdaten, Fehlerzustände oder auch Befehle für die Betriebseinstellung übertragen werden. Dies kann beispielsweise mittels eines Computers der Gebäudeleittechnik erfolgen. Für den zweitgenannten Fall haben viele Hersteller bereits Softwareapplikationen für mobile Geräte, sogenannte Apps, entwickelt, die der Installateur oder Techniker auf seinem Smartphone, Tablet oder Laptop installieren kann, und die eine Betriebsabfrage, Steuerung und/oder Einstellung der Komponente oder des Systems vor Ort ermöglichen. Hierzu haben die Komponenten oder Systeme in der Regel funkbasierte Kommunikationsschnittstellen, die beispielsweise auf der Bluetooth oder NFC-Technologie basieren.

Aus der Patentanmeldung EP 2 555 582 A2 ist ein Kommunikationssystem mit einem an einer Parkuhr oder einer anderen Zählvorrichtung angeordneten Wi-Fi Zugangspunkt offenbart, der dafür vorgesehen ist, zwischen einem mobilen Telefon und einem gewünschten Endgerät über das Internet, einen Voice over IP-Protokoll-Server und ein Telefon-Netzwerk eine Verbindung aufzubauen In der Patentanmeldung CN104294909 ist eine Entwässerungsvorrichtung mit einer Kreiselpumpe offenbart wo die Pumpe einen Bluetooth Empfänger enthält und wo ein externes Gerät mit der Pumpe verbunden werden kann über die Bluetooth Schnittstelle.

Es ist Aufgabe der vorliegenden Erfindung eine Kommunikationseinrichtung bereit zu stellen, die es einem Installateur oder Servicetechniker ermöglicht, bei einer Kreiselpumpe unmittelbar vor Ort einen direkten Kontakt mit einer Servicestelle aufzunehmen, so dass er sich nicht mehr von der Kreiselpumpe entfernen muss, um mit der Servicestelle kommunizieren zu können.

Diese Aufgabe wird durch eine Kreiselpumpe mit den Merkmalen des Anspruchs 1 sowie durch ein Verfahren mit den Merkmalen des Anspruchs 10 gelöst.

Vorteilhafte Weiterbildungen sind in den entsprechenden Unteransprüchen angegeben und werden nachfolgend erläutert.

Erfindungsgemäß wird eine Kommunikationseinrichtung in der Kreiselpumpe mit einer ersten und einer zweiten Kommunikationsschnittstelle vorgeschlagen, wobei die erste Kommunikationsschnittstelle zur Verbindung der Komponente oder des Systems mit einem lokalen Kommunikationsendgerät, und die zweite Kommunikationsschnittstelle zum Anschließen der Kreiselpumpe an ein lokales oder globales Netzwerk dient. Dabei ist ein Verbindungsmittel vorgesehen, dass die erste und zweite Kommunikationsschnittstelle kommunikationstechnisch derart miteinander verbindet, dass eine direkte Kommunikationsverbindung von dem lokalen Kommunikationsendgerät zum entfernten Kommunikationsgerät über das Verbindungsmittel aufbaubar ist. Durch das Verbindungsmittel sind die erste und die zweite Kommunikationsschnittstelle folglich miteinander verbunden, so dass über die erste Kommunikationsschnittstelle eingehende Daten zu der zweiten Kommunikationsschnittelle übertragen werden können, um sie zu dem entfernten Kommunikationsendgerät weiterleiten zu können. In gleicher Weise werden über die zweite Kommunikationsschnittstelle eingehende Kommunikationsdaten durch das Verbindungsmittel an die erste Kommunikationsschnittstelle geleitet, die dann diese Daten an das lokale Kommunikationsendgerät weitergibt.

Bei dem erfindungsgemäßen Verfahren zur Kommunikation zwischen einem lokalen Kommunikationsendgerät und einem entfernten Kommunikationsendgerät einer Servicestelle über eine direkte Kommunikationsverbindung ist vorgesehen, dass die direkte Kommunikationsverbindung über eine Kommunikationseinrichtung einer in der unmittelbaren Umgebung des lokalen Kommunikationsendgerätes befindlichen Kreiselpumpe erfolgt, die über eine zweite Kommunikationsschnittstelle mit einem lokalen oder globalen Netzwerk verbunden ist, wobei eine lokale Kommunikationsverbindung von dem lokalen Kommunikationsendgerät zu der Kommunikationseinrichtung über eine erste Kommunikationsschnittstelle der Kommunikationseinrichtung und eine Netzwerkverbindung von der Kommunikationseinrichtung zu dem entfernten Kommunikationsendgerät über die zweite Kommunikationsschnittstelle aufgebaut wird, und dass die direkte Kommunikationsverbindung anschließend über die lokale Kommunikationsverbindung und die Netzwerkverbindung sowie über ein die erste und zweite Kommunikationsschnittstelle kommunikationstechnisch miteinander verbindendes Verbindungsmittel geführt wird.

Durch die erfindungsgemäße Kommunikationseinrichtung wird die Kreiselpumpe folglich zu einem Router oder eine Art Relaisstation, die die Kommunikation von dem lokalen Kommunikationsendgerät zum entfernten Kommunikationsendgerät aus Sicht des Technikers/ Installateurs transparent ermöglicht, insbesondere dann, wenn der Techniker oder Installateur keinen Mobilfunkempfang an seinem Mobiltelefon am Ort der Komponente oder des Systems hat.

Die nach dem Stand der Technik vorhandene Trennung der "Front End" Kommunikation zwischen Installateur/Techniker und Komponente/System einerseits und der "Back End" Kommunikation zwischen der Komponente/dem System und einem entfernten Rechner, beispielsweise einem Gebäudeleitrechner oder einem Servicecomputer, wird dadurch aufgehoben. Dem Installateur oder Servicetechniker ist es möglich, direkt über die Komponente oder das System, insbesondere über die Kreiselpumpe, mit der Servicestelle Kontakt aufzunehmen.

Es sei bereits vorab erwähnt, dass das Verbindungsmittel sowie die beiden Kommunikationsschnittstellen unabhängig voneinander aus einer Kombination von Software und Hardware ausgestaltet sein können.

So umfassen die Kommunikationsschnittstellen jeweils physische Komponenten einerseits und eine softwarespezifische Komponente andererseits. In physischer Hinsicht (Hardware) weisen die Kommunikationsschnittstellen beispielswiese eine elektrisch-mechanische Steckbuchse oder eine Antenne und/ oder sonstige elektrische oder elektronische Komponenten wie Speicher oder Mikroprozessoren auf, um die Möglichkeit der Datenübertragung zu schaffen und Kommunikationsdaten zu übertragen, anzunehmen, aufzubereiten, zwischen zu speichern, umzuwandeln etc. Die softwarespezifische Komponente bezieht sich dabei auf das für die Übertragung verwendete Protokoll, das festlegt, ob und wie die zur Übertragung vorgesehenen Daten umgewandelt, aufgeteilt, gepackt, gereiht, verschlüsselt gesichert und/ oder adressiert werden. Dies ist in dem jeweiligen, das entsprechende Protokoll spezifizierenden Standard festgelegt.

Es ist möglich, dass die Kommunikationsschnittstellen zwar physisch voneinander getrennte Eingangs-/ Ausgangsportale (z.B. Steckbuchse oder Antenne) aufweisen, sich jedoch ein Teil der ihnen zugeordneten Elektronik teilen. So kann beispielsweise die einer Kommunikationsschnittstelle jeweils zugeordnete Software auf einer gemeinsamen Mikroprozessoreinheit laufen, insbesondere auf einer Mikroprozessoreinheit, die auch von dem Verbindungsmittel verwendet wird.

Das Verbindungmittel kann beispielsweise durch einen Mikroprozessor gebildet sein, der eingehende und ausgehende Daten zwischen den Kommunikationsschnittstellen weiterleitet. Eine Software ist in diesem Fall nicht zwingend erforderlich, sofern die elektrischen Signale nur durchgeschleift werden. Sie kann jedoch zusätzlich vorhanden sein, um die Daten gegebenenfalls aufzubereiten und/ oder umzuwandeln, insbesondere von einem Format in ein anderes Format, wenn die Schnittstellen unterschiedliche Kommunikationsprotokolle verwenden. Schließlich kann das Verbindungsmittel auch gänzlich in Software realisiert sein und auf einem Mikroprozessor oder Teilen der Hardware einer der beiden Kommunikationsschnittstellen laufen.

Die erste Kommunikationsschnittstelle kann beispielsweise eine kabelgebundene Schnittstelle, vorzugsweise eine USB-Schnittstelle (Universal Serial Bus) sein. Eine solche Schnittstelle ist an den meisten Laptops und Computern vorhanden. Sie ermöglicht eine hohe Datenübertragungsrate zwischen dem lokalen Kommunikationsendgerät und der Komponente oder dem System und gewährleistet ferner eine störungsfreie und ausfallsichere Verbindung. Alternativ kann die erste Kommunikationsschnittstelle eine Funkschnittstelle sein. Diese hat den Vorteil, dass keine elektrisch-mechanische Steckverbindung an der Komponente oder dem System erforderlich ist, welche in der rauen Umgebung des Technikraums, beispielsweise in Folge von Feuchtigkeit oder Schmutz beeinträchtigt werden kann. Die Funkschnittstelle kann beispielsweise eine Bluetooth, NFC (Near Field Communication), ZigBee, WLAN (Wireless Local Area Network), DECT (Digital Enhanced Cordless Telecommunication), ZWave, Infrarot und/ oder EnOcean-Schnittelle sein.

Entsprechend kann es sich bei dem lokalen Kommunikationsendgerät geeigneterweise um ein mobiles Gerät des Technikers oder Installateurs handeln, beispielsweise um einen Laptop, ein Smartphone oder ein Tablet, der/das über eine eigene USB-Schnittstelle zur Verbindung mit der USB-Schnittstelle der ersten Kommunikationsschnittstelle verfügt und/ oder Bluetooth-fähig, NFC-, ZigBee-, WLAN-, DECT-, ZWave-, EnOcean-, oder Infrarot-fähig ist, um eine Funkverbindung mit der ersten Kommunikationsschnittstelle aufbauen zu können.

Auch die zweite Kommunikationsschnittstelle kann eine kabelgebundene Schnittstelle, insbesondere eine Busschnittstelle sein, wie beispielsweise eine CAN (Controller Area Network), BacNet, LON (Local Operating Network), MODBUS, Ethernet, Profinet, Profibus oder ISDN-Schnittstelle. Diese standardisierten Schnittstellen sind in der Regel für den industriellen Einsatz konzipiert, bieten eine zuverlässige Infrastruktur und gewährleisten ausfallsichere Kommunikationsverbindungen.

Alternativ kann auch die zweite Kommunikationsschnittstelle eine Funkschnittstelle sein, beispielsweise eine WLAN oder Bluetooth Schnittstelle, so dass keine Kommunikationskabel zu der Komponente oder dem System verlegt werden müssen.

Es sei darauf hingweisen, dass bei den vorgenannten Übertragungsvarianten nicht zwischen der physischen Schnittstelle und dem Transportprotokoll unterschieden ist, da manche Übertragungsvarianten wie Bluetooth und WLAN beides spezifizieren. Wie bereits angesprochen, kann die physische Schnittstelle beispielsweise eine Ethernet-Schnittstelle, üblicherweise mit einer RJ-45 Steckbuchse, alternativ aber auch eine 2-Draht oder 3-Draht Buchse oder eine Antenne sein. Zumindest teilweise unabhängigkeit, aber grundsätzlich von der physischen Schnittstelle zu dfferenzieren ist dann das Übertragungsprotokoll. So kann beispielsweise CAN, MODBUS, LON, BacNet, Ethercat, Profinet oder Profibus über eine der vorgenannten physischen Schnittstellen übertragen werden. Die Protokolle können also auf verschiedenen physischen Schnittstellen realisiert werden. So kann zum Beispiel LON über 2-Drath und LON über Ethernet (LAN), CAN über eine 2-Draht oder 3-Draht-Leitung verwendet werden.

Bei dem entfernten Kommunikationsendgerät kann es sich beispielsweise um ein herkömmliches kabelgebundenes oder mobiles Telefon oder einen herkömmlichen Computer handeln, der von der Servicestelle zur Eingabe und/ oder Ansicht servicefallspezifischer Daten verwendet wird.

Gemäß einer vorteilhaften Weiterbildung der erfindungsgemäßen Kommunikationseinrichtung, können auch zwei oder mehrere erste Kommunikationsschnittstellen, die auf unterschiedlichen Kommunikationstechnologien basieren, vorhanden sein, um ein möglichst großes Spektrum verschiedener Schnittstellen am Front End bereitzustellen. Von diesen wird das lokale Kommunikationsendgerät zumindest eine Kommunikationsart mit hoher Sicherheit unterstützen. Zusätzlich oder alternativ hierzu kann die erfindungsgemäße Kommunikationseinrichtung auch zwei oder mehr zweite Kommunikationsschnittstellen aufweisen, so dass auch zum Back End verschiedene Vernetzungsmöglichkeiten gegeben sind.

Vorzugsweise kann bei der erfindungsgemäßen Kommunikationseinrichtung vorgesehen sein, dass die erste und zweite Kommunikationsschnittstelle auf verschiedenen Kommunikationsprotokollen basieren und das Verbindungsmittel eingerichtet ist, eine Übersetzung von dem Kommunikationsprotokoll der ersten Kommunikationsschnittstelle in das Kommunikationsprotokoll der zweiten Kommunikationsschnittstelle und umgekehrt durchzuführen. Die von der einen Kommunikationsschnittstelle kommenden Kommunikationsdaten werden von dem Verbindungsmittel somit in das Format umgewandelt, das von der anderen Kommunikationsschnittstelle verstanden und verarbeitet werden kann. Auf diese Weise können beliebige Paarungen der verschiedenen Technologien zwischen Front-End und Back-End erreicht werden.

So kann der Techniker oder Installateur beispielsweise mit seinem Smartphone, vorzugsweise über eine geeignete App mittels Bluetooth eine lokale Verbindung zu der Komponente oder dem System aufbauen. Ferner kann die Komponente oder das System an einen lokalen CAN-Bus angeschlossen sein, welcher wiederum über ein Gateway mit einem globalen Netz, insbesondere das Internet, verbunden ist. Die direkte Kommunikationsverbindung zwischen Techniker/ Installateur und Servicestelle wird dann von dem Smartphone über die Bluetooth Verbindung, die erste Kommunikationsschnittstelle, das Verbindungsmittel, die zweite Kommunikationsschnittstelle, den CAN-Bus, das Gateway und das Internet geführt. Die Vermittlungseinheit wandelt dabei die gemäß Bluetooth-Protokoll verpackten Daten in differenzielle Signale zur Übertragung über den CAN-Bus um.

Die verschiedenen genannten Kommunikationstechnologien erlauben unterschiedliche Übertragungsgeschwindigkeiten. Von der Übertragungsgeschwindigkeit abhängig ist auch die Art der möglichen Kommunikationsverbindung zwischen dem lokalen und dem entfernten Kommunikationsendgerät.

So kann die Kommunikationsverbindung beispielsweise eine asynchrone Kommunikationsverbindung sein, um elektronische Textnachrichten, Sprachnachrichten und/ oder Bildnachrichten zur Servicestelle zu übermitteln und/oder von dieser zu erhalten. Eine asynchrone Kommunikationsverbindung hat den Vorteil, dass sie keine Standleitung erfordert, d.h. die Datenübertragung nicht in Echtzeit erfolgen muss. Die Daten der Nachrichten können in Pakete gepackt und je nach Übertragungsgeschwindigkeit der zweiten Kommunikationsschnittstelle zu dem entfernten Kommunikationsendgerät übertragen werden. Entsprechend wird eine Antwort der Servicestelle asynchron zurückerhalten.

Für die Überragung elektronischer Nachrichten kann vorgesehen werden, dass ein entsprechender Messenger, d.h. ein Text-, Sprach- und/ oder Bildnachrichten verarbeitendes Programm, sowohl auf dem lokalen Kommunikationsendgerät als auch auf dem entfernten Kommunikationsendgerät vorhanden ist, um Text-, Sprach- und/ oder Bildnachrichten erstellen und versenden bzw. empfangen und wiedergeben zu können.

Gemäß einer alternativen Ausführungsvariante kann die Kommunikationsverbindung eine sprachbasierte Kommunikationsverbindung insbesondere zum Telefonieren mit der Servicestelle sein. Dies schließt eine konventionelle Telefonverbindung ein, bei der die Gesprächspartner, d.h. der Installateur/Techniker und ein Servicemitarbeiter in Echtzeit oder nahezu in Echtzeit, d.h. ohne wesentliche Zeitverzögerung einander hören können.

Textnachrichten und Sprachnachrichten können beispielsweise mit dem konventionellen Bluetooth Protokoll (Bluetooth classic) übertragen werden, das Datenraten bis zum 80 kbit/s ermöglicht. Für eine Telefonverbindung kann demgegenüber das Bluetooth Protokoll 4.0 verwendet werden, das eine Datenübertragung bis zu 2,1 MBit/s ermöglicht. Geeigneter Weise kann die Sprachverbindung auf dem Voice over IP-Protokoll (VolP) basieren. Hierfür sind 100-120 kbit/s notwendig, was ebenfalls mit dem Bluetooth-Protokoll 4.0 übertragen werden kann.

Gemäß einer weiteren alternativen Ausführungsvariante kann die Kommunikationsverbindung eine videobasierte Kommunikationsverbindung zum bildgestützten Telefonieren mit der Servicestelle sein. Dies ermöglicht es, dem Servicemitarbeiter die Komponente oder das System sogar zu zeigen und dabei zu erklären, worin das Problem besteht, so dass er sich von dem Problem vor Ort selbst ein Bild machen kann.

Zum Aufbau der direkten Kommunikationsverbindung kann von dem lokalen Kommunikationsendgerät eine Anfrage zur Kontaktaufnahme mit der Servicestelle an die Kommunikationseinheit gesendet werden, welche infolgedessen den Aufbau der direkten Kommunikationsverbindung auslöst. Dies kann beispielsweise dadurch erfolgen, die Verbindungseinheit aufgrund der Anfrage eine der Servicestelle zugeordnete, hinterlegte Zieladresse anruft. Dabei kann die Anfrage von der Kommunikationseinrichtung unter Hinzufügung einer eindeutigen Kennung und/ oder Absendeadresse der Komponente oder des Systems an die Servicestelle weitergegeben werden. Die Servicestelle kann dann Anruf oder die Nachricht entgegennehmen und darauf antworten, beispielsweise indem eine Antwortnachricht an die Absendeadresse gesandt wird.

Gemäß einer bevorzugten Ausführungsvariante kann die Kreiselpumpe eine Heizungspumpe einer Zentralheizungsanlage, eine Kühlmittelpumpe einer zentralen Kühlanlage oder eine Boosterpumpe einer Druckerhöhungsanlage der Trinkwasserversorgung sein. Die Kommunikationseinrichtung ist Teil einer Pumpenelektronik der Kreiselpumpe. In diesem Fall wird dann kein zusätzliches, baulich separat zur Kreiselpumpe anzuordnendes Kommunikationsmodul benötigt, das die Kommunikationseinheit beherbergen muss. Vielmehr können die in den heutzutage verfügbaren Kreiselpumpenaggregaten ohnehin vorhandenen Kommunikationsschnittstellen verwendet werden, um die Kommunikationseinrichtung zu realisieren.

Die Pumpenelektronik bildet baulich eine Einheit mit der Kreiselpumpe. Sie kann in einem Elektronikgehäuse angeordnet sein, das am Pumpenmotor montiert ist. Es ist aber gemäß einer nicht zur Erfindung gehörenden Variante auch möglich, dass die Pumpenelektronik fernab der Kreiselpumpe angeordnet werden kann und lediglich elektrische Versorgungsleitungen von dieser zur Kreiselpumpe führen. Dies ist insbesondere dann von Vorteil ist, wenn die Kreiselpumpe in einem unzugänglichen oder schlecht zugänglichen Bereich des Technikraumes angeordnet ist und die Bedienung der Pumpenelektronik dadurch eingeschränkt wäre.

Bei Pumpen höherer Leistung, die zur Drehzahlregelung einen Frequenzumrichter benötigen, der aufgrund der Leistungsdichte nicht mehr baulich am Kreiselpumpenaggregat selbst montiert werden kann, sondern einen hierfür eigens vorgesehenen Schaltschrank erfordert, kann die Pumpenelektronik auch Teil eines solchen abseits der Kreiselpumpe aufgestellten Schaltschranks sein. In einer derartigen, nicht erfindungsgemäßen Ausführungsvariante kann die Kommunikationseinrichtung also Teil eines solchen Schaltschranks sein, in dem vorzugsweise auch die Pumpenelektronik, d.h. die Regelungs- und/ oder Steuerungskomponenten für die Pumpe angeordnet sind. Selbst wenn Teile der Pumpenelektronik in dem Schaltschrank und andere Teile direkt an der Kreiselpumpe angeordnet sind, kann die Kommunikationseinrichtung Teil des Schaltschranks sein.

Weitere Merkmale und Vorteile der erfindungsgemäßen Kommunikationseinrichtung sowie des erfindungsgemäßen Verfahrens werden nachfolgend anhand eines Ausführungsbeispiels erläutert.

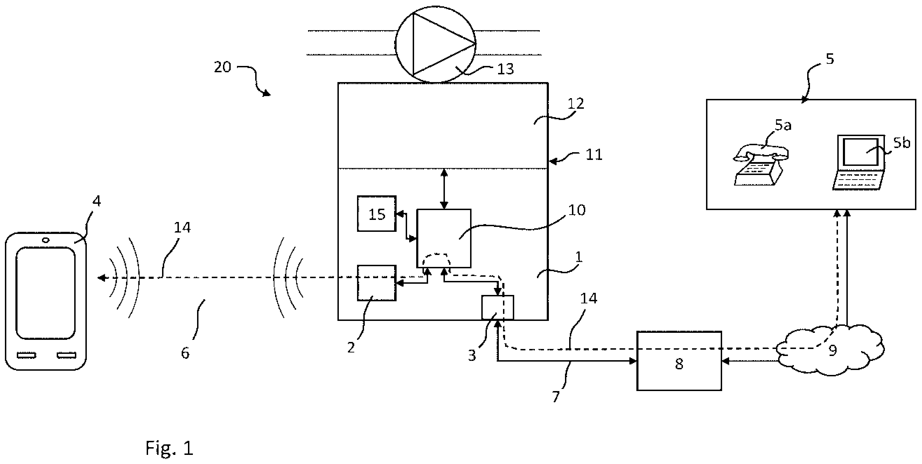

Figur 1 zeigt eine prinzipielle Darstellung einer Kommunikationsinfrastruktur, die es einem Techniker oder Installateur ermöglicht, bei einer sensorischen und/ oder aktorischen Komponente 20 vor Ort Kontakt mit einer Servicestelle 5 aufzunehmen. Hierzu kann er ein lokales Kommunikationsendgerät 4 verwenden, das hier beispielhaft in Gestalt eines Smartphones ausgeführt ist. Die Servicestelle 5 verwendet demgegenüber ein entferntes Kommunikationsendgerät 5a, 5b, dass beispielsweise ein herkömmliches Telefon 5a oder ein Computer 5b sein kann. Zur Kommunikation zwischen dem lokalen Kommunikationsendgerät 4 und dem entfernten Kommunikationsendgerät 5a, 5b wird eine direkte Kommunikationsverbindung 14, hier dargestellt in Gestalt eines gestrichelten Doppelpfeils, über eine Kommunikationseinrichtung 1 aufgebaut, die Teil der Komponente oder des Systems ist, zu der bzw. dem der Techniker oder Installateur Hilfestellung durch die Servicestelle 5 benötigt, beispielsweise infolge eines aufgetretenen Fehlers. In dem in Figur 1 gezeigten Beispiel handelt es sich bei der Komponente um eine Kreiselpumpe, die hier allgemein mit der Bezugsziffer 20 gekennzeichnet ist. Sie bildet im Rahmen der technischen Gebäudeausrüstung eine aktorische Komponente, kann jedoch auch zusätzlich sensorische Aufgaben besitzen.

Die Kreiselpumpe 20 umfasst eine elektromotorisch angetriebene Pumpeneinheit 13, wobei der Elektromotor hier der Einfachheit halber weg gelassen ist. Ferner umfasst sie eine Pumpenelektronik 11 zur Steuerung und/ oder Regelung der Pumpeneinheit, die innerhalb eines baulich am Elektromotor befestigten Gehäuses angeordnet ist. Sie kann jedoch gemäß einer nicht gezeigten, nicht zur Erfindung gehörenden Ausführungsvariante fernab der Pumpeneinheit 13 angeordnet sein. Die Pumpenelektronik 11 umfasst eine Steuerungseinheit 12 zur Drehzahlregelung der Pumpeneinheit 13, insbesondere einen Frequenzumrichter. Ferner ist die Kommunikationseinrichtung 1 ebenfalls Teil der Pumpenelektronik 11.

Darüber hinaus kann auch wenigstens ein Sensor und/ oder wenigstens ein Aktor mit der Pumpe 20, insbesondere mit der Pumpenelektronik 11, verbunden sein, so dass die Pumpenelektronik Messdaten des entsprechenden Sensors erhalten und/ oder Steuerbefehle an den Aktor senden kann. Der Sensor kann beispielsweise ein Drucksensor, Differenzdrucksensor, Durchflusssensor, Temperatursensor, Vibrationssensor und/ oder Magnetfeldsensor sein. So können Größen wie Druck, Volumenstrom, die Temperatur des Fördermediums oder die Motortemperatur, Lagerzustände und/ oder die Drehzahl erfasst werden. Ferner könne sich auch Temperatursensoren auf oder in der Pumpenelektronik befinden und somit Aufschluss über die Elektroniktemperatur beispielsweise die Mikrocontrollertemperatur geben. Ein Aktor kann beispielsweise ein Stellventil sein.

Ein an die Pumpenelektronik angeschlossener Sensor und/ oder Aktor hat den Vorteil, dass der Techniker/ Installateur über die erste Schnittstelle 2 und/ oder die Servicestelle 5 über die zweite Schnittstelle bei Bedarf die Messdaten des Sensors oder der Sensoren abrufen und/ oder den Aktor steuern kann. Für den Service 5 ist dies besonders vorteilhaft, zum Fehler erkennen zu können.

Die Kommunikationseinrichtung 1 umfasst eine erste Kommunikationsschnittstelle 2 sowie eine zweite Kommunikationsschnittstelle 3. Die erste Kommunikationsschnittstelle 2 dient dem Aufbau einer lokalen Kommunikationsverbindung zwischen der Pumpenelektronik 11 und dem lokalen Kommunikationsendgerät 4, wohingegen die zweite Kommunikationsschnittstelle 3 zum Anschließen der Pumpenelektronik 11 unmittelbar an ein lokales Netzwerk 7, 8 dient. Dieses kann wiederum über ein entsprechendes Koppelelement 8 an ein globales Netzwerk 9 angeschlossen sein. Über die erste Kommunikationsschnittstelle 2 kann der Techniker/ Installateur Betriebseinstellungen der Kreiselpumpe 20 an die Pumpenelektronik 11 übertragen und/ oder Betriebsdaten aus der Pumpenelektronik 11 abfragen. Über die zweite Kommunikationsschnittstelle 3 kann mittels eines entfernten Rechners, beispielsweise eines Leitrechners einer Gebäudeleittechnik eine Fernsteuerung und/ oder Fernabfrage von Betriebseinstellungen und/ oder Betriebsdaten der Kreiselpumpe 20 erfolgen.

Die erste Kommunikationsschnittstelle 2 ist hier als Funkschnittstelle ausgeführt, beispielsweise als eine auf der Bluetooth-Technologie basierende Schnittstelle, um über Bluetooth mit dem lokalen Kommunikationsendgerät 4 über eine lokale Kommunikationsverbindung/ Funkverbindung 6 zu kommunizieren, welches entsprechend ebenfalls Bluetooth-fähig ist. Hierzu kann eine Applikation auf dem lokalen Kommunikationsendgerät 4 vorhanden sein. Diese Kommunikation am so genannten Front-End ermöglicht es, die Betriebseinstellungen der Kreiselpumpe 20 an die Pumpenelektronik 11 zu übertragen und/ oder Betriebsdaten aus der Pumpenelektronik 11 abzufragen.

Bei der zweiten Kommunikationsschnittstelle 3 kann es sich beispielsweise um eine kabelgebundene Bus-Schnittstelle, insbesondere ein CAN-Bus Schnittstelle handeln, über die die Pumpenelektronik 11 seitens des "Back Ends" mit dem CAN-Bus beispielsweise mit einer Gebäudeleittechnik verbunden werden kann. Alternativ kann es sich bei der Kommunikationsschnittstelle 3 um eine auf TCP/IP basierende Ethernet Schnittstelle handeln, um die Pumpenelektronik 11 an ein Internetprotokoll basiertes LAN (Local Area Network) anzuschließen. Wie in Figur 1 gezeigt, verbindet eine Netzwerkverbindung 7 die zweite Kommunikationsschnittstelle 3 mit einem Gateway 8 oder einem Internetrouter, welcher eine Verbindung des lokalen Bus-Netzwerks mit dem Internet 9 bereitstellt. Mit dem Internet 9 ist auch die Servicestelle 5 verbunden und kann somit über eine entsprechende Internetverbindung erreicht werden. Alternativ kann es sich bei dem globalen Netzwerk 9 um ein Telefonnetzwerk handeln, über das die Servicestelle 5 telefonisch erreichbar ist und das das Gateway 8 mit dem lokalen Netzwerk 7 verbindet.

Die Kommunikationseinrichtung 1 umfasst ferner ein Verbindungsmittel 10, das die erste und zweite Kommunikationsschnittstelle 2, 3 kommunikationstechnisch miteinander verbindet. Hierfür sind entsprechende elektrische Verbindungen vorgesehen, über die digitale und/oder analoge Daten von der ersten Kommunikationsschnittstelle 2 zum Verbindungsmittel 10 sowie von diesem zur ersten Kommunikationsschnittstelle 2 einerseits, und vom Verbindungsmittel 10 zur zweiten Kommunikationsschnittstelle 3 sowie von dieser zum Verbindungsmittel 10 andererseits übertragen werden können.

Mit Hilfe des Verbindungsmittels 10 ist es nunmehr möglich, eine direkte Kommunikationsverbindung 14 von dem lokalen Kommunikationsendgerät 4 zum entfernten Kommunikationsendgerät 5a, 5b direkt über die Pumpenelektronik 11 aufzubauen. Für einen Installateur oder Techniker, der eine Hilfestellung von der Servicestelle 5 zu der Kreiselpumpe 20 benötigt, ist es somit möglich, selbst wenn die Kreiselpumpe 20 in einem kommunikationstechnisch abgeschirmten, insbesondere mobilfunktechnisch abgeschirmten Raum angeordnet ist, mit der Servicestelle 5 problemlos Kontakt aufzunehmen. Das Verbindungsmittel 10 führt dabei eine Umwandlung von Datenformaten durch, insbesondere wandelt es die gemäß dem Bluetooth-Protokoll übertragenen, beispielsweise nach TCP/IP gepackten Daten in differenzielle CAN-Signale um, die über den CAN-Bus von der zweiten Kommunikationsschnittstelle 3 übertragen werden können. Wie Figur 1 zeigt, gibt es somit keine direkte Verbindung zwischen der ersten und der zweiten Kommunikationsschnittstelle 2, 3. Vielmehr erfolgt die Verbindung über einen Umweg, der über das Verbindungsmittel 10 führt.

Das Verbindungsmittel 10 und die beiden Kommunikationsschnittstellen 2, 3 sind aus einer Kombination aus Software und Hardware realisiert. So weist die erste Kommunikationsschnittstelle 2 beispielsweise mindestens eine Antenne sowie eine Elektronik zum Aufbau einer Funkverbindung mit dem lokalen Kommunikationsendgerät 4 auf. Ferner weist die zweite Kommunikationsschnittstelle 3 mindestens eine elektrisch/mechanische Schnittstelle zum Anschluss an eine CAN-Busleitung 7 sowie einen entsprechenden CAN-Bus Controller auf, zur Steuerung der über den CAN-Bus 7 eingehenden und abgehenden Kommunikation. Das Verbindungsmittel 10 besteht bei dem Ausführungsbeispiel in Figur 1 zumindest aus einem Mikrocontroller, auf dem eine entsprechende Software abläuft, um die von der jeweiligen Schnittstelle 2, 3 ankommenden Daten entgegen zu nehmen, umzuwandeln, ggf. aufzubereiten, zwischen zu speichern und an die andere Schnittstelle 2 weiterzugeben.

Für die Zwischenspeicherung ist ein entsprechendes Speichermittel 15 vorgesehen. Bei dem Mikrocontroller kann es sich um einen zentralen Mikrocontroller der Pumpenelektronik 11 handeln, der auch Regelungsfunktionen der Kreiselpumpe 20 übernimmt und aus diesem Grunde auch mit der Steuerungseinheit 12, d.h. dem Frequenzumrichter der Pumpeneinheit 13 in Verbindung steht. Dies wird durch den Doppelpfeil zwischen der Steuerungseinheit 12 und dem Verbindungsmittel 10 veranschaulicht.

Zur Kommunikation zwischen dem lokalen Kommunikationsendgerät 4 und dem entfernten Kommunikationsendgerät 5a, 5b der Servicestelle wird nun die direkte Kommunikationsverbindung 14 über die Kommunikationseinrichtung 1, die sich in unmittelbarer Umgebung des lokalen Kommunikationsendgeräts 4 befindet, wie folgt aufgebaut:
Zunächst wird eine lokale Verbindung 6 zwischen dem lokalen Kommunikationsendgerät 4 und der ersten Kommunikationsschnittstelle 2 hergestellt, beispielsweise unter Verwendung des Bluetooth-Protokolls. Eine Netzwerkverbindung 7 zwischen der Pumpenelektronik 11 respektive der Kommunikationseinrichtung und einem lokalen Netzwerk 7, 8 besteht dabei bereits. Sie wurde bei der Installation der Kreiselpumpe 20 respektive bei seinem Inbetriebnahmeprozess aufgebaut.

Das lokale Kommunikationsendgerät sendet nunmehr eine Anfrage zur Kontaktaufnahme mit der Servicestelle an die Kommunikationseinheit 1, wodurch der Aufbau der direkten Kommunikationsverbindung 14 ausgelöst wird. Die Kommunikationseinrichtung 1 baut nunmehr eine Verbindung zur Servicestelle über die zweite Kommunikationsschnittstelle 3, die Netzwerkverbindung 7, das Gateway 8 sowie entsprechend das Internet 9 zu dem entfernten Kommunikationsendgerät 5a, 5b der Servicestelle 5 auf. Hierzu verwendet es eine Adresse des entfernten Kommunikationsendgerätes 5a, 5b, die in dem Verbindungsmittel 10, dem Speichermittel 15 oder dem lokalen Kommunikationsendgerät 4 hinterlegt ist. In letztem Fall übermittelt das lokale Kommunikationsendgerät 4 diese Adresse gemeinsam mit seiner Anfrage zur Kontaktaufnahme an die Kommunikationseinrichtung 1.

Die Servicestelle 5 nimmt nunmehr die Anfrage an, so dass die direkte Kommunikationsverbindung 14 zwischen dem lokalen Kommunikationsendgerät 4 und dem entfernten Kommunikationsendgerät 5a, 5b aufgebaut ist.

Über die Kommunikationsverbindung können im einfachsten Fall kurze elektronische Nachrichten übertragen werden, beispielsweise Textnachrichten, Sprachnachrichten und/oder auch Bildnachrichten. So kann der Techniker/Installateur zunächst eine Anfrage als Textnachricht, Sprachnachricht, ggf. zusätzlich auch unterstützt mit einem Foto der Kreiselpumpe 20 formulieren und an die Servicestelle 5 richten. Dies hat den Vorteil, dass die Kommunikationsverbindung 14 keine hohen Datenraten übertragen muss. Die Kommunikation ist somit asynchron, wie dies auch bei einer SMS oder E-Mail der Fall ist. Die Servicestelle 5 antwortet dann zeitversetzt auf die Anfrage mit einer entsprechend zurückkommenden Text-, Sprach- und/oder Bildnachricht, die eine Handlungsempfehlung zur Behebung des Problems an der Kreiselpumpe 20 beinhaltet. Der Installateur/Techniker kann nunmehr diese Handlungsempfehlung an der Kreiselpumpe 20 umsetzen. Bietet die Kommunikationsverbindung 14 eine ausreichend hohe Datenrate, kann auch eine telefonische Verbindung zur Servicestelle aufgebaut werden.

Der große Vorteil dieses erfindungsgemäßen Verfahrens ist es, dass der Techniker, Installateur aufgrund eines kommunikationstechnisch abgeschirmten Technikraumes, in dem die Komponente oder das System der elektrischen Gebäudeausrichtung installiert ist, zur Kontaktaufnahme mit dem Service nicht verlassen muss. Vielmehr kann er die Komponente respektive das System als Router verwenden um eine Kommunikationsverbindung mit der Servicestelle aufzunehmen. Dies erleichtert ihm im erheblichen Maße die Arbeit bei der Problembehebung.

## Patentansprüche

1. Kreiselpumpe (20) der technischen Gebäudeausrüstung, umfassend eine Kommunikationseinrichtung (1) mit einer ersten Kommunikationsschnittstelle (2) zur Verbindung der Kreiselpumpe (20) mit einem lokalen Kommunikationsendgerät (4), und mit einer zweiten Kommunikationsschnittstelle (3) zum Anschließen der Kreiselpumpe (20) an ein lokales oder globales Netzwerk (8, 9) zur Kommunikation mit einem entfernten Kommunikationsendgerät (5a, 5b), **gekennzeichnet durch** ein Verbindungsmittel (10), das die erste und zweite Kommunikationsschnittstelle (2, 3) kommunikationstechnisch derart miteinander verbindet, dass eine direkte Kommunikationsverbindung (14) von dem lokalen Kommunikationsendgerät (4) zum entfernten Kommunikationsendgerät (5a, 5b) einer Servicestelle (5) über das Verbindungsmittel (10) aufbaubar ist, wobei die Kommunikationseinrichtung (1) Teil einer Pumpenelektronik (11) der Kreiselpumpe (20) ist und die Pumpenelektronik (11) baulich eine Einheit mit der Kreiselpumpe (20) bildet.

2. Kreiselpumpe (20) nach Anspruch 1, **dadurch gekennzeichnet, dass** die erste Kommunikationsschnittstelle (2) eine kabelgebundene Schnittstelle, insbesondere eine USB- oder Ethernet-Schnittstelle ist.

3. Kreiselpumpe (20) nach Anspruch 1, **dadurch gekennzeichnet, dass** die erste Kommunikationsschnittstelle (2) eine Funkschnittstelle ist, insbesondere eine Bluetooth, NFC, ZigBee, WLAN, DECT, ZWave, Infrarot oder EnOcean-Schnittstelle ist.

4. Kreiselpumpe (20) nach einem der vorherigen Ansprüche, **dadurch gekennzeichnet, dass** die zweite Kommunikationsschnittstelle (3) eine kabelgebundene Busschnittstelle ist, insbesondere eine CAN, BacNet, LON, MODBUS, Ethernet, Profibus, Profinet oder ISDN-Schnittstelle ist.

5. Kreiselpumpe (20) nach einem der Ansprüche 1 bis 4, **dadurch gekennzeichnet, dass** die zweite Kommunikationsschnittstelle (3) eine Funkschnittstelle ist, insbesondere eine Bluetooth oder WLAN-Schnittstelle ist.

6. Kreiselpumpe (20) nach einem der vorherigen Ansprüche, **dadurch gekennzeichnet, dass** die erste und zweite Kommunikationsschnittstelle (2, 3) auf verschiedenen Kommunikationsprotokollen basieren und das Verbindungsmittel (10) eingerichtet ist, eine Übersetzung von dem Kommunikationsprotokoll der ersten Kommunikationsschnittstelle (2) in das Kommunikationsprotokoll der zweiten Kommunikationsschnittstelle (3) und umgekehrt durchzuführen.

7. Kreiselpumpe (20) nach einem der vorherigen Ansprüche, **dadurch gekennzeichnet, dass** die Kommunikationsverbindung (14) eine asynchrone Kommunikationsverbindung zur Übermittlung elektronischer Text- Sprach- und/ oder Bildnachrichten zur und/ oder von der Servicestelle (5) ist.

8. Kreiselpumpe (20) nach einem der Ansprüche 1 bis 6, **dadurch gekennzeichnet, dass** die Kommunikationsverbindung (14) eine sprachbasierte Kommunikationsverbindung zum Telefonieren mit der Servicestelle (5), insbesondere eine VolP-Verbindung ist.

9. Kreiselpumpe (20) nach einem der Ansprüche 1 bis 6, **dadurch gekennzeichnet, dass** die Kommunikationsverbindung (14) eine videobasierte Kommunikationsverbindung zum bildgestützten Telefonieren mit der Servicestelle (5) ist.

10. Verfahren zur Kommunikation zwischen einem lokalen Kommunikationsendgerät (4) und einem entfernten Kommunikationsendgerät (5a, 5b) über eine direkte Kommunikationsverbindung (14), **dadurch gekennzeichnet, dass** die direkte Kommunikationsverbindung (14) über eine Kommunikationseinrichtung (1) einer in der unmittelbaren Umgebung des lokalen Kommunikationsendgerätes (4) befindlichen Kreiselpumpe (20) der technischen Gebäudeausrüstung erfolgt, wobei die Kommunikationseinrichtung (1) Teil einer baulich eine Einheit mit der Kreiselpumpe (20) bildenden Pumpenelektronik (11) ist und über eine zweite Kommunikationsschnittstelle (3) mit einem lokalen oder globalen Netzwerk (8, 9) verbunden ist, wobei eine lokale Kommunikationsverbindung (6) von dem lokalen Kommunikationsendgerät (4) zu der Kommunikationseinrichtung (1) über eine erste Kommunikationsschnittstelle (2) der Kommunikationseinrichtung (1) und eine Netzwerkverbindung (7) von der Kommunikationseinrichtung (1) zu dem entfernten Kommunikationsendgerät (5a, 5b) einer Servicestelle (5) über die zweite Kommunikationsschnittstelle (3) aufgebaut wird, und dass die direkte Kommunikationsverbindung (14) anschließend über die lokale Kommunikationsverbindung (6) und die Netzwerkverbindung (7) sowie über ein die erste und zweite Kommunikationsschnittstelle (2, 3) kommunikationstechnisch miteinander verbindendes Verbindungsmittel (10) geführt wird.

11. Verfahren nach Anspruch 10, **dadurch gekennzeichnet, dass** von dem lokalen Kommunikationsendgerät (4) eine Anfrage zur Kontaktaufnahme mit der Servicestelle (5) an die Kommunikationseinheit (1) gesendet wird, die den Aufbau der direkten Kommunikationsverbindung (14) auslöst.

12. Verfahren nach Anspruch 11, **dadurch gekennzeichnet, dass** die Anfrage von der Kommunikationseinrichtung (1) unter Hinzufügung einer eindeutigen Kennung und/ oder Absendeadresse der Kreiselpumpe an die Servicestelle (5) weitergegeben wird.

## Claims

1. Centrifugal pump (20) as part of the technical building equipment comprising a communication unit (1) with a first communication interface (2) to connect the centrifugal pump (20) to a local communication device (4) and a second communication interface (3) to connect the centrifugal pump (20) to a local or global network (8, 9) for communication with a remote communication device (5a, 5b), **characterised by** a connector (10) that connects the first and second communication interfaces (2, 3) so that a direct communication connection (14) can be established between the local communication device (4) and the remote communication device (5a, 5b) of a service centre (5) via the connector (10), wherein the communication unit (1) is part of a pump electronics (11) of the centrifugal pump (20) and the pump electronics (11) structurally forms a unit with the centrifugal pump (20).

2. Centrifugal pump (20) according to claim 1, **characterised by** the first communication interface (2) being a wired interface, notably a USB or Ethernet interface.

3. Centrifugal pump (20) according to claim 1, **characterised by** the first communication interface (2) being a wireless interface, notably a Bluetooth, NFC, ZigBee, WLAN, DECT, ZWave, infrared or EnOcean interface.

4. Centrifugal pump (20) according to one of the preceding claims, **characterised by** the second communication interface (3) being a wired bus interface, notably a CAN, BacNet, LON, MODBUS, Ethernet, Profibus, Profinet or ISDN interface.

5. Centrifugal pump (20) according to one of the claims 1 through 4, **characterised by** the second communication interface (3) being a wireless interface, notably a Bluetooth or WLAN interface.

6. Centrifugal pump (20) according to one of the preceding claims, **characterised by** the first and second communication interfaces (2, 3) being based on different communication protocols and the connector (10) being configured for the translation of the communication protocol of the first communication interface (2) to the communication protocol of the second communication interface (3) and vice versa.

7. Centrifugal pump (20) according to one of the preceding claims, **characterised by** the communication connection (14) being an asynchronous communication connection for the transmission of electronic text, voice and/or image messages to and/or from the service centre (5).

8. Centrifugal pump (20) according to one of the claims 1 through 6, **characterised by** the communication connection (14) being a voice-based communication connection for telephony with the service centre (5), notably a VoIP connection.

9. Centrifugal pump (20) according to one of the claims 1 through 6, **characterised by** the communication connection (14) being a video-based communication connection for image-assisted telephony with the service centre (5).

10. Method for communication between a local communication device (4) and a remote communication device (5a, 5b) via a direct communication connection (14), **characterised by** the direct communication connection (14) being established by a communication unit (1) of a centrifugal pump (20) as part of the technical building equipment located in the immediate vicinity of the local communication device (4), wherein the communication unit (1) is part of a pump electronics (11) structurally forming a unit with the centrifugal pump (20), and is connected to a local or global network (8, 9) via a second communication interface (3), in which a local communication connection (6) is established from the local communication device (4) to the communication unit (1) via a first communication interface (2) of the communication unit (1) and a network connection (7) is established from the communication unit (1) to the remote communication device (5a, 5b) of a service centre (5) via the second communication interface (3), and the direct communication connection (14) is subsequently routed via the local communication connection (6) and the network connection (7) as well as a connector (10) that establishes a communication connection between the first and second communication interfaces (2, 3).

11. Method according to claim 10, **characterised by** the local communication device (4) sending a request to contact the service centre (5) to the communication unit (1), which causes the direct communication connection (14) to be established.

12. Method according to claim 11, **characterised by** the communication unit (1) transferring the request to the service centre (5) with the addition of a unique identifier and/or sender address of the centrifugal pump.

## Revendications

1. Pompe centrifuge (20) de l'équipement technique du bâtiment comprenant un dispositif de communication (1) avec une première interface de communication (2) pour connecter la pompe centrifuge (20) à un terminal de communication local (4), et avec une seconde interface de communication (3) pour raccorder la pompe centrifuge (20) à un réseau local ou global (8, 9) pour communiquer avec un terminal de communication distant (5a, 5b), **caractérisée par** un moyen de connexion (10) reliant la première et la seconde interface de communication (2, 3) pour communiquer de telle manière qu'une liaison de communication directe (14) du terminal de communication local (4) vers le terminal de communication distant (5a, 5b) d'un centre de service (5) peut être établie par le moyen de connexion (10), le dispositif de communication (1) fait partie d'une électronique de pompe (11) de la pompe centrifuge (20) et l'électronique de pompe (11) form une unité de construction avec la pompe centrifuge (20).

2. Pompe centrifuge (20) selon la revendication 1, **caractérisée en ce que** la première interface de communication (2) est une interface câblée, notamment une interface USB ou Ethernet.

3. Pompe centrifuge (20) selon la revendication 1, **caractérisée en ce que** la première interface de communication (2) est une interface sans fil, notamment une interface Bluetooth, NFC, ZigBee, Wi-Fi, DECT, ZWave, infrarouge ou EnOcean.

4. Pompe centrifuge (20) selon l'une des revendications précédentes, **caractérisée en ce que** la seconde interface de communication (3) est une interface bus câblée, notamment un interface CAN, BacNet, LON, MODBUS, Ethernet, Profibus, Profinet ou RNIS.

5. Pompe centrifuge (20) selon l'une des revendications 1 à 4, **caractérisée en ce que** la seconde interface de communication (3) est une interface sans fil, notamment une interface Bluetooth ou Wi-Fi.

6. Pompe centrifuge (20) selon l'une des revendications précédentes, **caractérisée en ce que** la première et la seconde interface de communication (2, 3) reposent sur différents protocoles de communication et que le moyen de connexion (10) est configuré pour faire la traduction entre le protocole de communication de la première interface de communication (2) et le protocole de communication de la seconde interface de communication (3) et vice-versa.

7. Pompe centrifuge (20) selon l'une des revendications précédentes, **caractérisée en ce que** la liaison de communication (14) est une liaison de communication asynchrone pour transmettre les messages sous forme de texte, audio ou images vers ou à partir d'un centre de service (5).

8. Pompe centrifuge (20) selon l'une des revendications 1 à 6, **caractérisée en ce que** la liaison de communication (14) est une liaison de communication vocale de téléphonie avec le centre de service (5), notamment une liaison VolP.

9. Pompe centrifuge (20) selon l'une des revendications 1 à 6 , **caractérisée en ce que** la liaison de communication (14) est une liaison de communication vidéo de téléphonie par image avec le centre de service (5).

10. Procédé de communication entre un terminal de communication local (4) et un terminal de communication distant (5a, 5b) au travers d'une liaison de communication directe (14), **caractérisé en ce que** la liaison de communication directe (14) est établie par un dispositif de communication (1) d'une pompe centrifuge (20) de l'équipement technique du bâtiment située à proximité immédiate du terminal de communication local (4), le dispositif de communication (1) fait partie d'une électronique de pompe (11) formant une unité de construction avec la pompe centrifuge (20) et est reliée par une seconde interface de communication (3) à un réseau local ou global (8, 9), sachant qu'une liaison de communication locale (6) du terminal de communication local (4) vers le dispositif de communication (1) est établie au travers d'une première interface de communication (2) du dispositif de communication (1) et une connexion réseau (7) depuis le dispositif de communication (1) vers le terminal de communication distant (5a, 5b)) d'un centre de service (5) au travers de la seconde interface de communication (3) et que la liaison de communication directe (14) est ensuite connectée par la liaison de communication locale (6) et la connexion réseau (7) ainsi qu'un moyen de connexion (10) reliant pour communication la première et la seconde interface de communication (2, 3).

11. Procédé selon la revendication 10, **caractérisé en ce que** le terminal de communication local (4) envoie une requête de prise de contact avec le centre de service (5) au dispositif de communication (1) déclenchant l'établissement de la liaison de communication directe (14).

12. Procédé selon la revendication 11, **caractérisé en ce que** la requête est transmise par le dispositif de communication (1) au centre de service (5) avec ajout d'un identifiant unique et/ou d'une adresse d'expédition de la pompe centrifuge.
